# DEMANDE DE BREVET EUROPEEN

(11) **EP 3 628 176 A1**
(43) Date de publication de la demande: **01.04.2020**
(21) Numéro de dépôt: 19199591.9
(22) Date de dépôt: 25.09.2019
(51) Int. Cl.: A23L 29/256, A23L 27/60

(54) **INGRÉDIENT ALIMENTAIRE COMPRENANT UN EXTRAIT D'ULVA SP, SON UTILISATION POUR ÉMULSIFIER LES PRODUITS ALIMENTAIRES, ET PRODUITS ALIMENTAIRES LE COMPRENANT**

(30) Priorité: 25.09.2018 FR 1858709
(71) Demandeur: Amadeite SAS, 56580 Brehan (FR)
(72) Inventeur: DA CRUZ, Tony, 56120 LE FORGES (FR); REHEL, Marvin, 22210 LA CHEZE (FR); BALUSSON, Hervé, 56580 BREHAN (FR)
(74) Mandataire: Vidon Brevets & Stratégie

(57) **Abrégé**

Ingrédient alimentaire pour incorporation dans les compositions alimentaires comprenant un extrait *d'Ulva sp* et optionnellement des fibres végétales. Composition alimentaire comprenant cet ingrédient alimentaire. Utilisation de cet ingrédient alimentaire pour améliorer les propriétés émulsifiantes des compositions alimentaires le comprenant. L'extrait d*'Ulva sp* présente des propriétés émulsifiantes, satisfaisantes et une innocuité démontrée pour son utilisation dans l'alimentation humaine.

## Description

### DOMAINE DE L'INVENTION

La présente invention concerne un ingrédient alimentaire pour incorporation dans les compositions alimentaires comprenant un extrait *d'Ulva sp* et optionnellement des fibres végétales. La présente invention concerne également une composition alimentaire comprenant cet ingrédient alimentaire ; l'utilisation de cet ingrédient alimentaire pour améliorer les propriétés émulsifiantes des compositions alimentaires le comprenant.

En effet, il a été démontré que ledit ingrédient alimentaire présente des propriétés émulsifiantes satisfaisantes et une innocuité démontrée pour son utilisation dans l'alimentation humaine.

### ART ANTERIEUR

Depuis des décennies, les produits issus de l'industrie agro-alimentaire, ou produits alimentaires industriels tels que sauce, glaces, purées, produits de boulangerie, produits retexturés ou reconstitués, sont devenus des incontournables de nos repas quotidiens.

Ces produits alimentaires sont fabriqués à partir de composés naturels de base comme par exemple des légumes, des fruits et/ou de la viande.

Depuis plusieurs années, on assiste à une véritable prise de conscience collective sur l'importance de ce que l'on mange et de l'impact qu'à notre alimentation sur notre santé.

Les consommateurs se tournent aujourd'hui vers des produits perçus comme plus sains et répondants à de nouvelles attentes : produits sans allergènes, produits ingrédients d'origine animales, produits plus naturels. Ces attentes peuvent être en lien avec de nouveaux régimes alimentaires tel que le végétarisme, végétalisme, ou encore flexitarisme.

Ces attentes constituent un vrai défi pour les acteurs du secteur agro-alimentaire notamment dans le développement de nouveaux ingrédients alimentaires naturels. En particulier, les émulsions alimentaires comme les sauces à base d'huile sont souvent formulées avec des ingrédients d'origine animale (jaune d'œuf), ou des allergènes majeurs (lécithine de soja).

Ainsi, pour ce qui concerne les produits alimentaires industriels, les consommateurs sont à la recherche de produits comprenant - outre les composés de base - des ingrédients alimentaires naturels. En particulier, les consommateurs sont à la recherche de produits alimentaires industriels comprenant - outre les composés de base - des ingrédients (ou agents) naturels, en complément ou en remplacement des agents émulsifiants usuels. Ces ingrédients alimentaires doivent avoir de bonnes propriétés émulsifiantes, stables dans le temps, et avoir une innocuité démontrée. En outre, ces émulsifiants alimentaires doivent préserver les propriétés organoleptiques des produits les contenant.

### OBJECTIFS DE L'INVENTION

La présente invention a pour objectif, dans au moins un mode de réalisation, la fourniture d'un ingrédient alimentaire d'origine naturelle, pour incorporation dans les compositions alimentaires, notamment les compositions alimentaires industrielles, comme par exemple des sauces, glaces, purées, produits de boulangerie, produits retexturés ou reconstitués tel que galettes de légumes.

La présente invention a également pour objectif, dans au moins un mode de réalisation, la fourniture d'un ingrédient alimentaire d'origine naturelle, pour incorporation dans les compositions alimentaires, dont l'innocuité pour la consommation humaine, est démontrée.

La présente invention a également pour objectif, dans au moins un mode de réalisation, la fourniture d'un ingrédient alimentaire d'origine naturelle préservant les propriétés organoleptiques des produits alimentaires industriels le comprenant.

La présente invention a également pour objectif, dans au moins un mode de réalisation, la fourniture d'un ingrédient alimentaire d'origine naturelle pour incorporation dans les compositions alimentaires améliorant les propriétés émulsifiantes des produits alimentaires industriels le comprenant.

La présente invention a également pour objectif, dans au moins un mode de réalisation, la fourniture d'un ingrédient alimentaire d'origine naturelle pour incorporation dans les compositions alimentaires ne nécessitant l'obtention préalable d'une autorisation de mise sur le marché.

### DESCRIPTION DE L'INVENTION

Selon un premier aspect, la présente invention concerne un ingrédient alimentaire émulsifiant comprenant un extrait d'algue marine *Ulva sp.* Cet ingrédient alimentaire est destiné à être incorporé à des compositions alimentaires.

En particulier, cet extrait d'algue marine *Ulva sp* est le retentât d'une étape d'ultrafiltration d'algue marine *Ulva sp.*

Cet ingrédient alimentaire émulsifiant peut comprendre de 5% à 95% dudit extrait d'algue marine *Ulva sp* par poids total de l'ingrédient alimentaire émulsifiant.

Selon un mode de réalisation particulier, l'ingrédient alimentaire émulsifiant comprend en outre des fibres végétales.

Préférentiellement, cet ingrédient alimentaire comprend en outre de 5 % à 95%, de fibres végétales par poids total dudit agent.

Préférentiellement, les fibres végétales sont des fibres végétales insoluble. Ces fibres végétales insolubles peuvent être choisies parmi le groupe consistant en les fibres de pois, les fibres de pommes, les fibres de citron, les fibres d'orange, les fibres de pommes de terre, les fibres de carottes, les fibres de graines de coton, les fibres de tomates, les fibres de betteraves, les fibres de soja, les fibres d'avoines, fibres de blé, fibres de bambou ou leurs mélanges.

Préférentiellement, l'ingrédient alimentaire est dépourvu de toute algue marine ou ses extraits, autre que l'extrait d'*Ulva sp.*

Selon un deuxième aspect, la présente invention concerne un ingrédient alimentaire comprenant un extrait d'*Ulva sp,* et optionnellement des fibres végétales, ledit extrait d'*Ulva sp* étant obtenu à partir du procédé comprenant au moins une des étapes ou combinaisons d'étapes suivantes :
- le traitement d'algues broyées pour obtenir une matière sèche entre 5 et 20% par l'ajout d'eau, préférentiellement 10% de matière sèche ;
- la séparation de la phase solide du broyat de sa phase liquide;
- la filtration de ladite phase liquide;
- l'ultrafiltration du filtrat à un seuil de coupure supérieur à 15kDa, préférentiellement supérieur à 0,5µm, encore préférentiellement supérieur à 1µm;

Selon un aspect particulier de l'invention, l'extrait d'algue Ulva sp étant obtenu à partir du procédé décrit précédemment, ce procédé comprenant en outre les étapes suivantes :
- la fourniture d'algues *Ulva sp* sous forme fraiche, sèche ou congelée ;
- le lavage et le dessablage des algues ;
- le broyage des algues lavées et dessablées ; et
- la stabilisation de l'extrait;

Selon un troisième aspect, la présente invention concerne une composition alimentaire comprenant entre 0,5 à 4,5% dudit ingrédient alimentaire décrit précédemment.

Selon un mode de réalisation particulier, ladite composition alimentaire est choisie parmi le groupe consistant en les sauces, les glaces, les purées, les brioches, les produits retexturés ou les produites reconstitués.

Selon un quatrième aspect, la présente invention concerne l'utilisation dudit ingrédient alimentaire pour améliorer les propriétés émulsifiantes de compositions alimentaires les comprenant.

Dans la présente invention, les expressions « produits alimentaires industriels » et « compositions alimentaires » sont interchangeables.

Les inventeurs ont mis en avant de manière inattendue que l'ingrédient alimentaire selon la présente invention - à savoir comprenant un extrait d'*Ulva sp* avec optionnellement des fibres végétales- présentait des propriétés émulsifiantes, notamment dans les produits alimentaires, notamment dans une sauce mayonnaise, tout à fait satisfaisantes. En effet, l'industrie agro-alimentaire est à la recherche de nouvelles solutions pour remplacer les émulsifiants alimentaires de synthèse ou d'origine animale, sans altérer la tenue, l'aspect ou encore les propriétés organoleptiques (par exemple le goût et l'odeur) du produit alimentaire. Or, au vu des tests pratiqués et rapportés ci-contre, les inventeurs ont démontré que l'extrait d'*Ulva sp* - qui est un produit d'origine naturel - présente des propriétés émulsifiantes satisfaisantes. En outre, les inventeurs ont démontré que l'émulsifiant alimentaire comprenant un extrait d'*Ulva sp,* améliore les propriétés émulsifiantes, notamment en réduisant la synérèse (ou déphasage), de manière significative. En cela, l'émulsifiant alimentaire comprenant un extrait d'*Ulva sp,* représente un substitut ou un complément aux ingrédients alimentaires, notamment les émulsifiants alimentaires, utilisés de manière usuelle dans les produits alimentaires.

### Extrait d'Ulva sp.

L'émulsifiant alimentaire comprend notamment un extrait d'*Ulva sp.*

*Ulva sp* sont également dénommées Ulves et correspondent aux algues vertes regroupées dans le genre *Ulva.* Selon la base de données AlgaeBase, la classification de ces algues est la suivante : *Eukaryota* (domaine), *Plantae* (règne), *Viridiplantae* (sous-règne), *Chlorophyta* (infra-règne), *Chlorophyta* (embranchement), *Tetraphytina* (sous-embranchement), *Ulvophyceae* (classe), *Ulvales* (ordre, *ulvaceae* (famille), *Ulva* (genre). Le genre Ulva intègre aujourd'hui deux morphotypes, la morphotype feuille, communément appelés de laitues de mers, et la morphotype tube, communément appelé Ulve en tube. Ce morphotype était classifié dans le genre Enteromorpha jusqu'en 2003 (Hayden et al). De nombreuses sous espèces ont été répertoriés pour les deux morphotypes le plus connu pour le morphotype feuille étant *Ulva lactuca* et pour le morphotype tube *Ulva intestinalis.* La présente invention concerne uniquement les algues du genre *Ulva,* et leurs extraits, qui sont comestibles et dont l'innocuité en alimentation humaine est démontrée.

En particulier, l'émulsifiant alimentaire selon l'invention comprend entre 5% à 100%, préférentiellement entre 40% et 100%, très préférentiellement entre 60 et 100% d'un extrait d'algue marine *Ulva sp* par poids total de l'ingrédient alimentaire émulsifiant. De manière alternatives, l'émulsifiant alimentaire selon l'invention comprend entre 5% à 95%, préférentiellement entre 40% et 95%, très préférentiellement entre 60 et 95% d'un extrait d'algue marine *Ulva sp* par poids total de l'ingrédient alimentaire émulsifiant.

### Fibres végétales

L'ingrédient alimentaire comprend en outre des fibres végétales provenant d'un végétal ou d'une combinaison de différents végétaux comme par exemple des légumes, légumineuses, céréales ou fruits. Les fibres végétales sont des substances résiduelles provenant de la paroi cellulaire ou du cytoplasme des végétaux, constituées de mélanges complexes de glucides. On les trouve exclusivement dans les aliments végétaux, comme par exemple les fruits, les céréales, les légumes comme par exemple la carotte, les légumineuses comme par exemple le pois.

Différentes fibres insolubles de fruits, légumes ou céréales sont commercialisées en tant qu'ingrédient alimentaire aux propriétés texturantes et incorporé dans différents types de produits finis. Ces fibres sont généralement des coproduits issus de procédés industriels (coproduit de l'industrie de jus pour les pulpes d'agrumes, coproduit de l'industrie sucrière pour les pulpes de betterave sucrière par exemple).

En particulier, l'ingrédient alimentaire selon l'invention comprend de 0% à 95%, préférentiellement de 0% à 60%, très préférentiellement de 0% à 40% de fibres végétales par poids total de l'ingrédient alimentaire. De manière alternative, l'ingrédient alimentaire selon l'invention comprend de 5% à 95%, préférentiellement de 5% à 60%, très préférentiellement de 5% à 40% de fibres végétales par poids total de l'ingrédient alimentaire.

### Procédé d'obtention d'un extrait d'Ulva sp.

L'extrait d'*Ulva sp* est préférentiellement un extrait aqueux ou sec.

Ledit extrait d'*Ulva sp* peut être obtenu par un procédé, comprenant l'une des étapes ou combinaison d'étapes suivantes :
d) le traitement desdites algues broyées pour obtenir une matière sèche entre 5 et 20% par l'ajout d'eau, préférentiellement 10% de matière sèche ;
e) la séparation de la phase solide du broyat de sa phase liquide ;
f) la filtration de ladite phase liquide ;
g) l'ultrafiltration du filtrat à un seuil de coupure compris entre 0,5 µm et 1kDa.

Préférentiellement, l'ultrafiltration du filtrat à un seuil de coupure supérieur à 15kDa, préférentiellement supérieur à 0,5µm, encore préférentiellement supérieur à 1µm;

Préférentiellement, ledit extrait d'*Ulva sp* peut être obtenu par un procédé comprenant la combinaison des étapes décrites précédemment et comprend en outre les étapes suivantes :
a) la fourniture d'algues *Ulva sp* sous forme fraiche, sèche ou congelée ;
b) le lavage et le dessablage des algues ;
c) le broyage des algues lavées et dessablées ;
h) la stabilisation de l'extrait.

L'extrait d'algue marine *Ulva sp* est optionnellement mélangé avec des fibres végétales, plus particulièrement des fibres végétales insolubles, notamment choisies parmi le groupe consistant en les fibres de pois, les fibres de pommes, les fibres de citron, les fibres d'orange, les fibres de pommes de terre, les fibres de carottes, les fibres de graines de coton, les fibres de tomates, les fibres de betteraves, les fibres de soja, les fibres d'avoines, fibres de blé, fibres de bambou ou leurs mélanges. Aucune autre algue marine ou ses extraits n'est ajoutée à cet ingrédient alimentaire.

Par la suite, l'émulsifiant alimentaire est incorporé à une composition alimentaire entre 0,5% et 4,5% du poids total de ladite composition. De nombreuses compositions alimentaires peuvent incorporer cet émulsifiant alimentaire notamment des compositions alimentaires choisies parmi le groupe consistant en les sauces, les glaces, les purées, les produits de boulangerie, les produits retexturés ou les produites reconstitués, comme par exemple les galettes de légumes.

Afin d'améliorer les propriétés émulsifiantes de compositions alimentaires, cet ingrédient alimentaire peut être incorporé à ces compositions.

### EXEMPLES

De nombreux tests ont été réalisés afin de démontrer les propriétés émulsifiantes d'un extrait d'algue marine *Ulva sp.* Les propriétés émulsifiantes d'un extrait d'algue marine *Ulva sp* permettent d'obtenir un mélange homogène de deux liquides normalement non miscibles entre eux, comme par exemple de l'eau et de l'huile.

Dans la présente invention, on distingue un produit émulsifiant d'un produit gélifiant par exemple. On entend par produit « gélifiant » un produit épaississant permettant de solidifier un liquide. Un produit gélifiant et un produit émulsifiant peuvent avoir un effet épaississant par l'augmentation de la viscosité qu'ils apportent. Cependant, un émulsifiant n'a pas forcément besoin d'avoir des propriétés gélifiantes ou épaississantes pour émulsifier deux liquides normalement non miscibles.

Ainsi, l'extrait d'algue marine *Ulva sp* selon l'invention démontre des propriétés émulsifiantes, mais n'a pas de propriétés gélifiantes ou épaississantes : mélangé à de l'eau il n'apporte pas de viscosité.

De plus, l'extrait d'algue marine *Ulva sp* selon l'invention est également utilisable à froid.

Plus particulièrement des tests ont été réalisés sur la limitation du déphasage d'une émulsion de type sauce mayonnaise formulée avec différents extraits d'*Ulva sp.*

Des extraits d'algue *Ulva sp* sont préparés selon le procédé précédemment décrit. L'étape de séparation de la phase solide du broyat de sa phase liquide se fait par exemple par pressage à l'aide d'une presse ou centrifugation à l'aide d'une centrifugeuse ou encore par décantage. L'étape de filtration de la phase liquide se fait par exemple par clarificateur, filtre, décanteur.

L'étape d'ultrafiltration du filtrat, plus particulièrement du retentât, d'algue *Ulva sp* se fait à un seuil de coupure supérieur à 15kDa, préférentiellement supérieur à 0,5µm, encore préférentiellement supérieur à 1µm.

Enfin, la stabilisation de l'extrait se fait par exemple par pasteurisation, stérilisation, séchage.

Différents extraits d'algues sont incorporés sous forme liquide pour faciliter les manipulations (pas de séchage), l'équivalent en sec calculé à partir de la matière sèche de l'extrait liquide est donné dans la dernière colonne.

Les compositions E001 à E005 testées sont présentées dans le **tableau 1** suivant :

**Tableau 1**

| **Essai** | **extrait algue** | **huile** | **Extrait *Ulva sp*** | **vinaigre** | **Sel** | **eau** |
|---|---|---|---|---|---|---|
| E001 | Extrait ulva sp 1 | 70% | 2,50% | 4,00% | 1,20% | 22,30% |
| E002 | Extrait ulva sp 1 | 70% | 1,25% | 4,00% | 1,20% | 23,55% |
| E003 | Extrait ulva sp 2 | 70% | 2,50% | 4,00% | 1,20% | 22,30% |
| E004 | Extrait ulva sp 2 | 70% | 1,25% | 4,00% | 1,20% | 23,55% |
| E005 | Extrait ulva sp 2 | 80% | 1,25% | 4,00% | 1,20% | 13,55% |

| | | | | | | |
|---|---|---|---|---|---|---|
| (nb : l'extrait « ulva sp 2 » a subit une clarification plus poussée) | | | | | | |

Les différents ingrédients sauf l'huile sont mélangés ensemble puis l'huile est ajoutée petit à petit. Le mélange est homogénéisé à l'aide d'un ultraturrax à 15k rpm pendant 1min puis 20k rpm pendant 30secondes (le même protocole sera appliqué pour tous les essais d'émulsification). Les émulsions sont stockées en étuve à 55°C.

Les observations à différents intervalles de temps sont rapportées dans les **tableaux 2** et **3** ci-dessous. Les émulsions dont le déphasage est trop important sont éliminées au fur et à mesure du test de vieillissement.

**Tableau 2**

| Stockage : 17 jours - 55°C | |
|---|---|
| Observations | ESSAI |
| pas de déphasage observable, aspect très légèrement huileux en surface | E001 |
| pas de déphasage observable, aspect légèrement huileux en surface | E002 |
| pas de déphasage observable, aspect très légèrement huileux en surface | E003 |
| pas de déphasage observable, aspect très légèrement huileux en surface | E004 |
| pas de déphasage observable, aspect légèrement huileux en surface | E005 |

**Tableau 3**

| Stockage 40 jours - 55°C | |
|---|---|
| Observations | ESSAI |
| pas de déphasage observable, aspect très légèrement huileux en surface | E001 |
| pas de déphasage observable, aspect légèrement huileux en surface | E002 |
| pas de déphasage observable, aspect très légèrement huileux en surface | E003 |
| pas de déphasage observable, aspect très légèrement huileux en surface | E004 |
| pas de déphasage observable, aspect légèrement huileux en surface | E005 |

Aucun des échantillons à 70% d'huile n'a déphasé de façon importante.

Une inspection visuelle montre que la sauce mayonnaise ainsi formulée est stable sous un stockage accéléré et a une texture et un goût acceptables comparables à la mayonnaise standard.

Ainsi, ces essais mettent l'accent sur l'utilisation potentielle de l'extrait d'*Ulva sp* comme émulsifiant alimentaire pour une sauce et un assaisonnement, sans allergène et sans extrait animal.

Dans un mode particulier de réalisation, l'ingrédient alimentaire émulsifiant, pour incorporation dans les compositions alimentaires, comprend un extrait d'algue marine *Ulva sp* et des fibres végétales, préférentiellement des fibres végétales insolubles. Des tests ont été réalisés afin de démontrer une synergie entre l'extrait d'algue *Ulva sp* et les fibres végétales, préférentiellement des fibres végétales insolubles, comme par exemple des fibres végétales de pois.

Des extraits d'algue *Ulva sp* sont préparés selon le procédé précédemment décrit, et mélangés à des fibres végétales de pois par exemple. Les propriétés émulsifiantes du mélange d'extrait d'*Ulva sp* et de fibres végétales de pois sur un mélange d'eau et d'huile sont analysées.

Les résultats ci-dessous présentés dans le **tableau 4** mettent avant une synergie avec les fibres végétales de pois dans une émulsion comprenant 70% huile et 30% d'eau.

**Tableau 4**

| Essai | Composition | **Hauteur initiale de l'émulsion (cm)** | **Hauteur phase aqueuse (cm)** | **Hauteur émulsion (cm)** | **% déphasage** |
|---|---|---|---|---|---|
| **E006** | 2% extrait *Ulva sp* selon l'invention | 9,05 | 2,8 | 6,25 | 30,94% |
| **E007** | 1% extrait *Ulva sp* selon l'invention + 1% fibres végétales de pois | 9,05 | 2,7 | 6,35 | 29,83% |
| **E008** | 2% fibres végétales de pois | 9,05 | 9,05 | 0 | 100,00% |

Ainsi, il est non seulement démontré que l'extrait *d'Ulva sp* possède des propriétés émulsifiantes, mais également que l'ajout de fibres végétales, et notamment de fibres végétales insolubles, comme par exemple des fibres végétales de pois, permettent d'améliorer les propriétés émulsifiantes d'un ingrédient alimentaire comprenant un extrait d'algue *Ulva sp* et des fibres végétales.

On constate donc que l'extrait d'algue marine *Ulva sp* joue un vrai rôle dans l'émulsification de l'huile dans l'eau. Il est en outre estimé que les fibres végétales insolubles sont capables de stabiliser par la rétention de l'eau, ce qui permet d'améliorer la stabilité de l'émulsion, particulièrement avec une forte teneur en eau.

Les proportions de deux types de fibres, extrait d'algue et fibres végétales insolubles, dépendent de la quantité relative d'eau et d'huile a émulsifier.

De manière avantageuse, l'étape d'ultrafiltration du filtrat, et en particulier du retentât, d'algue *Ulva sp* se fait à un seuil de coupure supérieur à 15kDa, préférentiellement supérieur à 0,5µm, encore préférentiellement supérieur à 1µm. On présente en lien avec le **tableau 5** des essais sur les propriétés émulsifiantes de différentes fractions d'algue *Ulva sp* produites au cours du procédé décrit ci-dessus. Des effets émulsifiants sont observés uniquement pour la fraction de haut poids moléculaire.

**Tableau 5**

| **Extrait testé** | **Dosage de l'extrait d'algue** | **Observations après 150H - conservation à Température ambiante** |
|---|---|---|
| témoin | 2,50% | déphasage total |
| JAV | 2,50% | léger déphasage |
| extrait de l'invention, au seuil de coupure selon l'invention | 2,50% | pas de déphasage observé |
| extrait de l'invention : perméat d'ultrafiltration à 100 nm | 2,50% | déphasage <1cm |
| extrait de l'invention : retentât d'ultrafiltration de 100 nm (i.e fraction entre 0,5µm et 100 kDa) | 2,50% | déphasage >1cm |
| extrait de l'invention : retentât d'ultrafiltration de 15 kDa (i.e fraction entre 15kDa et 100 nm) | 2,50% | déphasage >1cm |
| algue *Ulva sp* (partie insoluble) | 2,50% | déphasage total |
| algue *Ulva sp* entière séchée | 2,50% | émulsion impossible à formuler |

Ainsi, l'étape d'ultrafiltration selon l'invention permet de sélectionner les molécules de haut poids moléculaire permettant l'émulsification.

## Revendications

1. Ingrédient alimentaire émulsifiant, pour incorporation dans les compositions alimentaires, comprenant un extrait d'algue marine *Ulva sp*;

2. Ingrédient alimentaire émulsifiant selon la revendication 1, **caractérisé en ce que** ledit extrait d'algue marine *Ulva sp* est le retentât d'une étape d'ultrafiltration d'algue marine *Ulva sp*.

3. Ingrédient alimentaire émulsifiant selon l'une quelconque des revendications, **caractérisé en ce qu'**il comprend de 5% à 95%, d'un extrait d'algue marine *Ulva sp* par poids total dudit ingrédient.

4. Ingrédient alimentaire émulsifiant selon l'une quelconque des revendications précédentes, **caractérisé en ce qu'**il comprend en outre des fibres végétales.

5. Ingrédient alimentaire émulsifiant selon l'une quelconque des revendications précédentes, **caractérisé en ce qu'**il comprend de 5 % à 95%, de fibres végétales par poids total dudit ingrédient.

6. Ingrédient alimentaire émulsifiant selon l'une quelconque des revendications précédentes, **caractérisé en ce que** les fibres végétales sont des fibres végétales insolubles.

7. Ingrédient alimentaire émulsifiant selon la revendication 6, **caractérisé en ce que** les fibres végétales insolubles sont choisies parmi le groupe consistant en les fibres de pois, les fibres de pommes, les fibres de citron, les fibres d'orange, les fibres de pommes de terre, les fibres de carottes, les fibres de graines de coton, les fibres de tomates, les fibres de betteraves, les fibres de soja, les fibres d'avoines, fibres de blé, fibres de bambou ou leurs mélanges.

8. Ingrédient alimentaire émulsifiant selon l'une quelconque des revendications précédentes, **caractérisé en ce qu'**il est dépourvu de toute algue marine ou ses extraits, autre que l'extrait d'*Ulva sp.*

9. Ingrédient alimentaire émulsifiant pour incorporation dans les compositions alimentaires comprenant un extrait d'algue marine *Ulva sp*, et optionnellement des fibres végétales,
ledit extrait d'*Ulva sp* étant obtenu à partir du procédé comprenant au moins l'une des étapes ou combinaison d'étapes suivantes :
- le traitement desdites algues broyées pour obtenir une matière sèche entre 5 et 20% par l'ajout d'eau, préférentiellement 10% de matière sèche ;
- la séparation de la phase solide du broyat de sa phase liquide;
- la filtration de ladite phase liquide;
- l'ultrafiltration du filtrat à un seuil de coupure supérieur à 15kDa, préférentiellement supérieur à 0,5µm, encore préférentiellement supérieur à 1µm

10. Ingrédient alimentaire émulsifiant pour incorporation dans les compositions alimentaires comprenant un extrait d'algue marine *Ulva sp*, et optionnellement des fibres végétales,
ledit extrait marine d'*Ulva sp* étant obtenu à partir du procédé selon la revendication 9, ledit procédé comprenant en outre les étapes suivantes :
- la fourniture d'algues *Ulva sp* sous forme fraiche, sèche ou congelée ;
- le lavage et le dessablage des algues ;
- le broyage des algues lavées et dessablées ;
- la stabilisation de l'extrait.

11. Composition alimentaire comprenant entre 0,5 à 4,5% d'un ingrédient alimentaire émulsifiant selon l'une quelconque des revendications 1 à 10.

12. Composition alimentaire selon la revendication 11, **caractérisé en ce que** la composition est choisie parmi le groupe consistant en les sauces, les glaces, les purées, les brioches, les produits retexturés ou les produites reconstitués.

13. Utilisation de l'ingrédient alimentaire émulsifiant selon l'une quelconque des revendications 1 à 10 pour améliorer les propriétés émulsifiantes de compositions alimentaires les comprenant.
